**Europäisches Patentamt**

**European Patent Office**

**Office européen des brevets**

(19)

(11) Veröffentlichungsnummer: **0 212 232**
**B1**

(12) **EUROPÄISCHE PATENTSCHRIFT**

(45) Veröffentlichungstag der Patentschrift: **03.10.90**

(51) Int. Cl.⁵: **B 29 C 43/22**

(21) Anmeldenummer: **86109578.4**

(22) Anmeldetag: **12.07.86**

(54) Verfahren und Vorrichtung zum kontinuierlichen Herstellen thermoplastischer Kunststoffbahnen.

(30) Priorität: **24.08.85 DE 3530309**

(43) Veröffentlichungstag der Anmeldung:
**04.03.87 Patentblatt 87/10**

(45) Bekanntmachung des Hinweises auf die
Patenterteilung:
**03.10.90 Patentblatt 90/40**

(84) Benannte Vertragsstaaten:
**FR GB IT SE**

(56) Entgegenhaltungen:
**EP-A-0 046 526**
**EP-A-0 131 879**
**EP-A-0 151 422**
**EP-A-0 204 482**
**DE-A-2 922 152**
**US-A-3 223 027**

(73) Patentinhaber: **Held, Kurt**
**Alte Strasse 1**
**D-7218 Trossingen 2 (DE)**

(72) Erfinder: **Held, Kurt**
**Alte Strasse 1**
**D-7218 Trossingen 2 (DE)**

## Beschreibung

Die Erfindung betrifft ein Verfahren zur kontinuierlichen Herstellung thermoplastischer Kunststoffbahnen gemäß dem Oberbegriff des Patentanspruchs 1 und eine Vorrichtung zur Durchführung dieses Verfahrens gemäß dem Oberbegriff des Patentanspruchs 24. Ein derartiges Verfahren sowie eine zugehörige Vorrichtung sind aus DE—A—29922152 bekannt.

Halbzeuge aus thermoplastischem Kunststoff, wie Platten, Folien, Bänder, usw., werden vorwiegend durch Extrudieren hergestellt. In der Düse des Extruders richten sich die Makromoleküle der Kunststoffschmelze aufgrund der einwirkenden äußeren Kräfte in eine Vorzugsrichtung entsprechend der Fließrichtung aus. Diese Orientierung friert bei der raschen Abkühlung nach Verlassen der Düse ein, was zu inneren Spannungen des Halbzeuges führt. Weiterhin führen solche Orientierungen, verstärkt durch Wirbel, die aufgrund von Querschnittsverengungen in der Düse entstehen, auch oft zu Schmelzbruch, wobei die Kunststoffschmelze dann unter einem Stick-Slip-Effekt aus der Düse austritt, was zu einer rauhen Oberfläche des Halbzeuges führt. Ein Nachbearbeiten der Oberfläche des Extrudates nach dem Austritt aus der Düse des Extruders ist daher erforderlich.

Bekannte Produktionsanlagen zur Herstellung extrudierter Platten oder Folien aus thermoplastischen Kunststoffen bestehen aus einem Extruder mit Düse, einem nachfolgenden Glätt- und Kalibrierwerk, einer Kühleinrichtung, einem Abzug für die Kunststoffbahn und Vorrichtungen zum Ablängen der Kunststoffbahn, Stapeln der Platten, usw. Das aufgrund der rauhen Oberfläche des Extrudats nötige Nachbearbeiten erfolgt dabei im Kalibrierwerk. Ein solches Kalibrierwerk ist in der Regel ein aus mehreren Walzen mit hochglanzpolierten Oberflächen bestehender Kalander. Der Kalander bewirkt eine Abkühlung des Extrudats unter weitestgehender Eliminierung von Dickenschwankungen und eine Glättung der Oberfläche der Kunststoffbahn. Dabei muß der Kalander so eingestellt sein, daß nur ein Glätten der Oberfläche, nicht jedoch eine Verformung der gesamten Bahn erfolgt, da dann zusätzliche nicht symmetrische Eigenspannungszustände auftreten, was ein Verwerfen der Bahn nach sich zieht.

Nachteilig bei der Verwendung des Kalanders zur Glättung und Kalibrierung des Extrudats ist daher, daß damit zwar eine gewisse Glättung der Oberfläche erreicht werden kann, es jedoch nicht möglich ist, die bereits in der Bahn durch das Extrudieren vorhandenen Eigenspannungen zu beseitigen. Es besteht sogar die Gefahr, noch weitere, zusätzliche Eigenspannungen einzuarbeiten. Im Bereich der Walzen des Kalanders erfolgt eine Biegung der Kunststoffbahn um diese Walzen, so daß die Bahn im thermoelastischen Zustand sein muß, womit aber auch die Temperatur der Walzen relativ hoch gehalten werden muß, so daß nur eine beschränkte Abkühlung im Bereich der Walzen erfolgt. Diese Kühlung erfolgt daher vor allem während die Kunststoffbahn die Kühlwalzen des Kalanders umschlingt, also gebogen ist, was somit formfehlerhaft für die anzustrebende ebene, spannungsarme Kunststoffbahn ist. Die anschließende weitere Abkühlung in der nachfolgenden Abkühleinheit erfolgt dann drucklos. Aber auch während des Durchlaufs der Kunststoffbahn durch den Kalander wirkt nur jeweils ein kurzzeitiger Liniendruck auf die abkühlende Bahn, so daß insgesamt während der gesamten Abkühlphase der Kunststoffbahn nur kurzzeitig Druck einwirkt und damit die bisher erzielten Eigenschaften der Oberfläche der Kunststoffbahn noch weit entfernt vom idealerweise anzustrebenden Zustand sind.

Aus der EP-A-O 046 526 ist ebenfalls ein Verfahren und eine Vorrichtung zur kontinuierlichen Herstellung von Bahnen aus thermoplastischen Kunststoffen bekannt geworden. Bei diesem Verfahren werden die thermoplastischen Teilchen auf das vorgezogene Unterband einer Doppelkolbenschwingpresse zu einer Rohmaterialschicht gestreut. Diese Rohmaterialschicht wird auf dem Unterband vorgewärmt und anschließend zwischen den beiden Endlosbändern der Doppelkolbenschwingpresse einer kontinuierlichen Flächenpressung ausgesetzt. Die Druckplatten der Doppelkolbenschwingpresse sind in eine dem Einlaufbereich zugeordnete Heizzone und eine dem Auslaufbereich zugeordnete Kühlzone eingeteilt.

Bei der Doppelkolbenschwingpresse liegt am Oberband eine feststehende Druckplatte an während am Unterband eine vibrierende Druckplatte angeordnet ist. Dadurch wirken die Druckplatten direkt auf die Preßbänder zur Ausübung des Preßdruckes ein, so daß zwischen der feststehenden Druckplatte und dem sich bewegenden Preßband eine Reibungskraft auftritt. Damit läßt sich diese Vorrichtung nur mit geringem Druck betreiben, da ansonsten eine baldige Zerstörung der Oberflächen der Preßbänder aufgrund der Reibungskräfte auftritt. Zur Erzielung einer glatten Oberfläche und weitgehenden Reduzierung von Eigenspannungen der Kunststoffbahn sind jedoch häufig höhere Drücke erforderlich, die mit dieser wenig betriebssicheren Vorrichtung nicht aufzubringen sind.

Weiter nachteilig ist, daß durch das direkte Anliegen der Druckplatten an den Preßbändern sowie durch die vibrierende Druckplatte schwankende und undefinierte Kontaktflächen entstehen. Das führt wiederum zu einem schwankenden, ungleichmäßigen Flächendruck sowie zu nicht definierbaren Temperaturprofilen bei der Abkühlung der Kunststoffbahn, so daß wiederum keine wesentliche Reduzierung der Eigenspannungen erzielbar ist. Im Gegenteil erhält man qualitativ minderwertige Kunststoffbahnen.

In der DE-A-2 922 152 ist ein weiteres Verfahren und eine Vorrichtung zur Herstellung von Folien und Platten aus sinterfähigen Pulvern gezeigt. Die Vorrichtung besteht aus einer Doppelbandpresse mit einem vorgezogenen Unterband, über dem eine Streuvorrichtung für das sinterfähige Pulver angeordnet ist. In der Doppelbandpresse befinden sich Druckplatten, die direkt am Preßband anliegen können oder bei denen der Druck mittels umlaufender Rollenbänder auf die Preßbänder übertragen wird, wobei das Pulver zu einer Kunststoffbahn zwischen den Preßbändern verpreßt wird. Die dem Einlauf zugeordneten Druckplatten sind als Heizplatten ausgebildet und die dem Auslauf zugeordneten Druckplatten als Kühlplatten.

Auch hier ist nachteilig, daß es sich bei der gezeigten Doppelbandpresse mit an den Preßbändern anliegenden Druckplatten um eine nicht betriebssichere, nur für geringen Druck geeignete Vorrichtung handelt. Sind zwischen den Druckplatten und den Preßbändern umlaufende Rollenbänder angeordnet, so ist ein großer Aufwand zur Steuerung dieser Rollenbänder nötig, so daß eine komplizierte, fehleranfällige Vorrichtung resultiert. Aufgrund undefinierter und schwankender Kontaktflächen erhält man einen ungleichmäßigen Flächendruck und schwankende, unregelmäßige Temperaturprofile, so daß auch dieses Verfahren und die Vorrichtung zur Herstellung von qualitativ verbesserten Kunststoffbahnen nicht geeignet ist.

Ausgehend von diesem Stand der Technik liegt der Erfindung die Aufgabe zugrunde, ein Verfahren und eine Vorrichtung zur kontinuierlichen Herstellung extrudierter Kunststoffbahnen aus thermoplastischem Material, insbesondere für die Weiterverarbeitung zu Platten oder Folien, anzugeben, mit dem sowohl eine verbesserte Güte der Oberfläche der Kunststoffbahn als auch verringerte Eigenspannungen derselben zu erreichen sind.

Die Lösung dieser Aufgabe wird durch die im Kennzeichen des Patentanspruchs 1 beschriebene technische Lehre vermittelt und eine zur Durchführung dieses Verfahrens dienende Vorrichtung wird im Kennzeichen des Patentanspruchs 24 angegeben.

Die mit der Erfindung erzielbaren Vorteile bestehen insbesondere darin, daß der Druck gleichmäßig flächenhaft ohne Schwankungen während der gesamten Abkühldauer auf der extrudierten Kunststoffbahn in der ebenen Lage, in der auch das fertige Erzeugnis anfallen soll, einwirkt. Dadurch resultiert eine ausgezeichnete Oberfläche der Kunststoffbahn von bis jetzt noch nicht gekannter Güte. Da die Bahn während der Abkühlung nicht auf Biegung beansprucht wird, sondern vollkommen eben bleibt, können keine weiteren Eigenspannungen in der Bahn entstehen. Vielmehr hat es sich gezeigt, daß die durch das Extrudieren unvermeidbar entstehenden Eigenspannungen sich mit Hilfe des erfindungsgemäßen Verfahrens weitgehend reduzieren lassen. Das mit dem erfindungsgemäßen Verfahren und der Vorrichtung mögliche konstante Einhalten bestimmter Temperaturprofile gestattet, die Abkühlgeschwindigkeit der Kunststoffbahn den Erfordernissen der Mikrostruktur des jeweiligen Thermoplasten anzupassen. Das erfindungsgemäße Verfahren bewirkt daher eine entscheidende Verbesserung der Eigenschaften von extrudierten Kunststoffbahnen aus thermoplastischem Material.

Ein bevorzugtes Ausführungsbeispiel der Erfindung wird im folgenden näher beschrieben. Es zeigen

Fig. 1 die Gesamtansicht einer Produktionsanlage zur kontinuierlichen Herstellung eines platten- oder folienförmigen Extrudats,

Fig. 2 einen Schnitt durch eine Doppelbandpresse mit vorgeschaltetem Extruder,

Fig. 3 eine Druckplatte in Draufsicht,

Fig. 4 einen Schnitt durch die Druckplatte entlang der Linie A-A in Fig. 3,

Fig. 5 eine Vorrichtung zur kontinuierlichen Beschichtung von Trägerbahnen,

Fig. 6 einen vergrösserten Ausschnitt der Einlaufzone bei einer Vorrichtung zur beidseitigen Beschichtung von Trägerbahnen,

Fig. 7 die Einlaufzone einer Doppelbandpresse,

Fig. 8 eine Vorrichtung zum Verschweissen mehrerer extrudierter thermoplastischer Bahnen,

Fig. 9 die Einlaufzone einer Doppelbandpresse mit beheizten Umlenktrommeln und

Fig. 10 die Einlaufzone einer Doppelbandpresse mit vorgezogener unterer Bandeinheit.

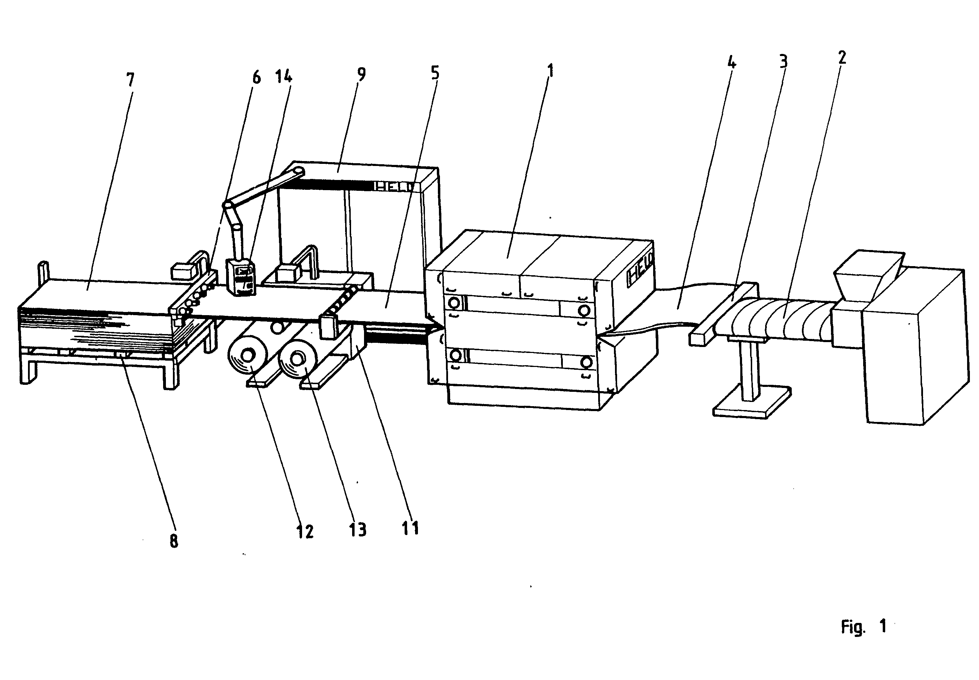

In Fig. 1 ist eine Produktionsanlage zur kontinuierlichen Herstellung von thermoplastischen Tafeln und Folien schematisch dargestellt. Sie besteht aus einer Doppelbandpresse 1, vor deren Einlauf sich ein Extruder 2 befindet. Die aus der Düse 3 des Extruders 2 austretende bahnförmige Kunststoffschmelze 4 wird nach dem erfindungsgemässen Verfahren in die Doppelbandpresse 1 eingeführt und in dieser unter Einwirkung von Flächendruck soweit abgekühlt, dass die Kunststoffschmelze 4 nach Verlassen der Doppelbandpresse 1 zu einer festen Kunststoffbahn 5 mit glatter und polierter oder geprägter Oberfläche ausgeformt ist. Diese Kunststoffbahn 5 läuft mit gleichförmiger Geschwindigkeit zu einer Querschneideeinheit 6, wo sie in Platten 7 beliebiger Grösse aufgeteilt wird, die in Paletten 8 zum Abtransport gestapelt werden. Alternativ kann die Kunststoffbahn 5, falls es sich um eine dünne, flexible Kunststoffbahn oder um eine Folie handelt, auf eine Rolle 12 in einer Aufwickeleinheit 11 nach Verlassen der Doppelbandpresse 1 aufgewickelt werden. Ist die Rolle 12 gefüllt, so kann ohne Produktionsunterbrechung die Kunststoffbahn 5 auf eine Ersatzrolle 13 weiter aufgewickelt werden. Die gesamte Produktionsanlage wird von einem Computer in einem Schaltschrank 9 gesteuert. Die Dateneingabe durch den Benutzer erfolgt über das Terminal 14.

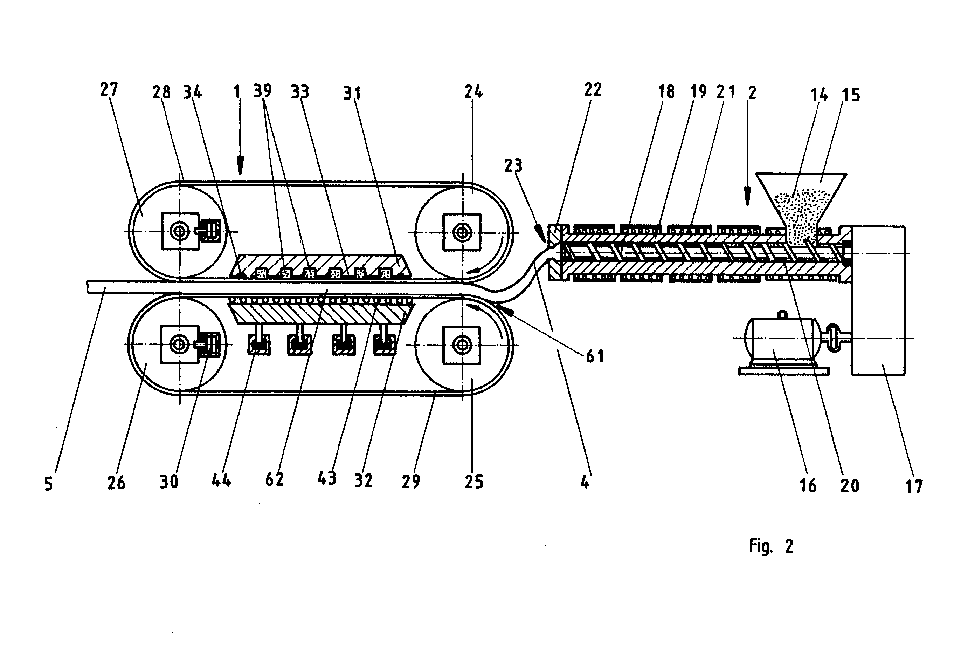

Die Fig. 2 zeigt den Extruder 2 mit nachgeschalteter Doppelbandpresse 1 schematisch im Schnitt. Der wie bekannt ausgebildete Extruder 2 besitzt einen länglichen Zylinder 19, in dem sich eine von einem Motor 16 über ein Reduziergetriebe 17 angetriebene Schnecke 18 befindet. Die Schnecke 18 nimmt in ihrem hinteren Teil in ihren wendelförmigen Vertiefungen 20 das Granulat 14 für den zu verarbeitenden thermoplastischen Kunststoff auf, das in einen Trichter 15 des Extruders 2 gefüllt wird. Dieses Granulat wird mit der Schnecke 18 weitertransportiert und während dieses Transports aufgeschmolzen. Dazu sind um den Zylinder 19 mehrere Heizmanschetten 21 gelegt. Am vorderen Ende der Schnecke 18 ist die Kunststoffschmelze homogenisiert und verdichtet und tritt durch die Düse 23 des am vorderen Teil des Zylinders 19 angeflanschten Extruderwerkzeuges 22 aus. Die Düse 23 des Extruderwerkzeuges 22 gibt der austretenden, warmen Kunststoffschmelze 4 die Querschnittsform. Die Düse 23 ist als Breitschlitzdüse ausgebildet, so dass man eine flache und bahnförmige Kunststoffschmelze 4 mit im wesentlichen rechteckigem Querschnitt erhält.

Die Kunststoffschmelze 4 tritt als auf Verarbeitungstemperatur befindliche, viskoelastische Bahn aus der Düse 23 des Extruders 2 aus, wird von den Bändern der Doppelbandpresse 1 aufgenommen und in die Einlaufzone 61 der Doppelbandpresse 1 eingeführt. Die kontinuierlich arbeitende Doppelbandpresse 1 wird in Fig. 2 ebenfalls im Schnitt gezeigt. Sie besitzt vier in einem Pressengestell gelagerte Umlenktrommeln 24, 25, 26, 27. Das Pressengestell ist in der Zeichnung der Übersichtlichkeit halber weggelassen. Um jeweils zwei der auf einer horizontalen Ebene liegenden Umlenktrommeln, die sich entsprechend der Pfeile in den Umlenktrommeln 24 und 25 drehen, ist ein endloses, aus Metall bestehendes Pressband 28, 29 herumgeführt, das mittels Hydraulikzylindern 30 gespannt wird. Zwischen den beiden Pressbändern 28, 29, in der Reaktionszone 62, wird die aus der Kunststoffschmelze 4 bestehende, in der Zeichnung von rechts nach links vorlaufende Bahn, unter Flächendruck abgekühlt.

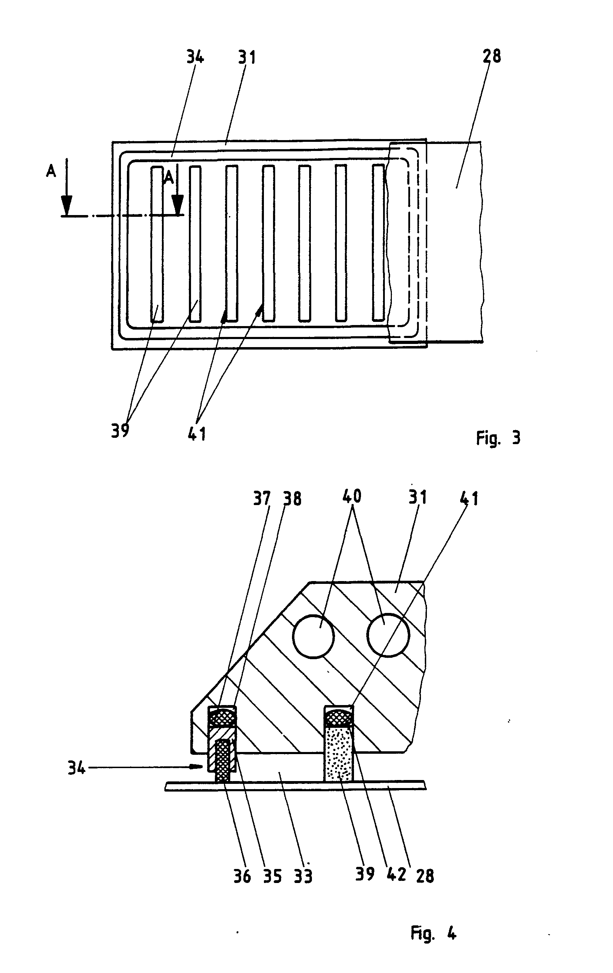

Der auf die Kunststoffschmelze 4 ausgeübte Flächendruck wird über Druckplatten 31, 32 hydraulisch oder mechanisch auf die Innenseiten der Pressbänder 28, 29 aufgebracht und von dort auf die Kunststoffschmelze 4 übertragen. Zur hydraulischen Druckübertragung wird in dem Raum 33, der nach oben und unten von der Druckplatte 31 bzw. der Pressbandinnenseite 28 und zu den Seiten von der Dichtung 34 begrenzt wird, ein unter Druck setzbares, fluides Druckmedium eingebracht, so dass der Raum 33 als Druckkissen wirkt. Als fluides Druckmedium wird beispielsweise Öl oder Luft verwendet. Der Aufbau der entlang des Randes der Druckplatte 31 rechteckig geschlossenen Dichtung 34 ist in Fig. 4 zu sehen. Sie besteht aus einer U-förmigen Halteleiste 35 aus Metall, in die der elastische Dichtkörper 36 eingeklemmt ist. Die U-förmige Halteleiste 35 befindet sich in einer Nut 38 entlang des Randes der Druckplatte 31. Auf der Halteleiste 35 liegt dem Nutgrund zu ein O-Ring 37, auf den vom Nutgrund her ein Druckmedium einwirkt, so dass der Dichtkörper 36 gegen die Innenseite des Pressbandes 28 gedrückt wird und den Raum 33 zu den Seiten hin abdichtet.

Um die Kunststoffschmelze 4 auf die gewünschte Endtemperatur beim Verlassen der Doppelbandpresse 1 abkühlen zu können, werden die Druckplatten 31, 32 auf einer Temperatur gehalten, die sehr viel geringer als die zu erreichende Endtemperatur der Kunststoffschmelze 4 ist. Dazu sind in den Druckplatten 31, 32 Kanäle 40 angebracht, wie ebenfalls der Fig. 4 zu entnehmen ist. Diese Kanäle 40 werden von einer Kühlflüssigkeit durchströmt, die die Wärme aufnimmt und abführt und somit die Solltemperatur der Druckplatte 31 auf dem gewünschten niedrigen Niveau hält. Selbstverständlich kann die Kühlung der Druckplatte auch elektrisch, beispielsweise mittels Peltier-Elementen erfolgen.

In der Druckplatte 31 befinden sich quer zur Vorschubrichtung des Pressbandes 28 angebrachte, über die Breite der Druckplatte reichende Nuten 41, wie aus Fig. 3 und 4 ersichtlich ist. In diese Nuten 41 sind stabförmige wärmeleitende Elemente 39 eingesetzt. Diese wärmeleitenden Elemente 39 bestehen aus Kupfer und sind unter Ausbildung eines guten Wärmeleitkontaktes einerseits mit der Druckplatte 31 verbunden und berühren andrerseits die Innenseite des Pressbandes 28 schleifend. Dem Nutgrund der Nut 41 zu liegt auf dem wärmeleitendem Element 39 eine elastomere Dichtung 42 auf, die vom Nutgrund her mit einem Druckmittel beaufschlagt wird, so dass das wärmeleitenden Element 39 immer Kontakt mit dem Pressband 28 besitzt.

Da zwischen der Druckplatte 31 und der Kunststoffschmelze 4 ein Wärmegefälle besteht, setzt ein Wärmestrom von der Kunststoffschmelze 4 über das Pressband 28 und die wärmeleitenden Elemente 39 in die Druckplatte 31 ein, so dass die Kunststoffschmelze während des Durchlaufs durch die Doppelbandpresse kontinuierlich abgekühlt wird. Die Geschwindigkeit der Abkühlung der Kunststoffschmelze 4 hängt dabei von dem Temperaturniveau der Druckplatte 31 und der Anzahl der wärmeleitenden Elementen 39, sowie von deren Wärmeleitfähigkeiten ab. Die erreichbare Endtemperatur für die Kunststoffschmelze 4 lässt sich weiter über die Geschwindigkeit der Pressbänder 28, 29 in der Doppelbandpresse regeln. Selbstverständlich kann die Druckplatte 32 ebenfalls wie die Druckplatte 31 ausgebildet sein und wärmeleitende Elemente 39 enthalten, wobei dann die Abkühlgeschwindigkeit verdoppelt wird. Weitere Materialien und Ausbildungsformen für solche wärmeleitenden Elemente sind in der Offenlegungsschrift DE-OS 33 25 578 beschrieben, so dass hierauf nicht mehr weiter eingegangen zu werden braucht.

Anstelle der hydraulischen Druckübertragung in der Doppelbandpresse 1 kann auch eine mechanische Druckübertragung vorgesehen sein, deren Ausbildung in Fig. 2 anhand der Druckplatte 32 erläutert werden soll. Zwischen der Druckplatte 32 und der Pressbandinnenseite 29 sind ortsfeste, aus Metall bestehende Rollen 43 angebracht. Mit Hilfe von Hydraulikzylindern 44 wird die Druckplatte 32 und damit die Rollen 43 gegen die Innenseite des Pressbandes 29 angestellt, so dass dadurch der gewünschte Druck auf die Kunststoffbahn ausgeübt wird.

Die Druckplatte 32 wird ebenfalls, wie weiter oben bereits beschrieben, gekühlt. Damit setzt ein Wärmestrom von der Kunststoffschmelze 4 über das Pressband 29 und die Rollen 43 in die Druckplatte 32 ein und die Kunststoffschmelze 4 wird bis zur gewünschten Temperatur abgekühlt. Sollte die Grösse des Wärmestroms über die Rollen 43 nicht ausreichen, so können zusätzliche wärmeleitende Elemente 39, die wie weiter oben beschrieben ausgebildet sind, zwischen den Rollen angebracht werden. Falls es gewünscht wird, kann bei einer erfindungsgemässen Vorrichtung auch die mechanische mit der hydraulischen Druckübertragung unter Einsatz von wärmeleitenden Elementen kombiniert werden.

Die Kunststoffschmelze 4 wird also nach Verlassen des Extruders 2 auf ein Pressband 29 oder 28 der Doppelbandpresse im Bereich der vorderen Umlenktrommeln 24, 25 aufgelegt und von dem pressband in die Doppelbandpresse befördert oder direkt mitten in den Spalt zwischen den beiden Umlenktrommeln 24, 25 in die Einlaufzone 61 extrudiert, so dass die Kunststoffschmelze 4 von beiden Pressbändern 28, 29 gleichzeitig erfasst wird. Während die Kunststoffschmelze 4 kontinuierlich durch die Doppelbandpresse 1 gezogen wird, womit die Doppelbandpresse 1 gleichzeitig als Abzugseinrichtung für das Extrudat wirkt, wird sie unter gleichzeitiger Einwirkung von Flächendruck abgekühlt. Der aufgebrachte Flächendruck wirkt als Kalibrierung, der der thermoplastischen Kunststoffbahn eine bestimmte Dicke und eine bestimmte Oberflächenstruktur verleiht. Durch den gleichmässig und flächenhaft während der Abkühlung einwirkenden Druck erhält man, wie gefunden wurde, vorteilhafterweise eine Beseitigung von bereits vorhandenen Orientierungen der Kunststoffmoleküle und der damit verbundenen, vom Extrudieren herrührenden Eigenspannungen, so dass mit dem erfindungsgemässen Verfahren extrudierte Kunststoffplatten oder -folien von bisher noch nicht gekannter Qualität herstellbar sind.

Die Oberflächenstruktur der die Doppelbandpresse 1 verlassenden Kunststoffbahn 5 hängt in weiten Grenzen von den Oberflächen der Pressbänder 28, 29 ab. Besitzen die Pressbänder eine glatte Oberfläche, so erhält die Oberfläche der Kunststoffbahn ein glattes, poliertes Aussehen, d.h. die Kunststoffbahn 5 wird in der Doppelbandpresse 1 presspoliert. Dieser Effekt kann noch verstärkt werden, indem man die Oberfläche der Pressbänder mit einer hochglänzenden, galvanisch abgeschiedenen Chromschicht versieht. Besitzen die Pressbänder eine strukturierte Oberfläche, beispielsweise Noppen, Riffelungen, Ornamente, Wirrstrukturen, usw., so erhält die Kunststoffbahn 5 ein in die Oberfläche eingeprägtes Abbild dieser Muster. Es ist ebenfalls möglich eine Strukturträgerbahn, die z.B. aus einer Metallfolie mit strukturierter Oberfläche besteht, vor der Doppelbandpresse so mit der Kunststoffschmelze zusammenlaufen zu lassen, dass die nichtstrukturierte Oberfläche der Strukturträgerbahn auf einem Pressband der Doppelbandpresse aufliegt und die strukturierte Oberfläche der Strukturträgerbahn auf der Kunststoffschmelze, wobei sich dann unter dem Flächendruck in der Doppelbandpresse die Strukturierung des Strukturträgers in die Kunststoffbahn einprägt. Bei Verlassen der Doppelbandpresse an den Umlenktrommeln 26 und 27 wird der Strukturträger dann von der Kunststoffbahn 5 getrennt.

Manche thermoplastischen Kunststoffe können eine Abkühlung in mehreren Stufen erfordern. Dazu werden die Druckplatten 31, 32 der Doppelbandpresse 1 in mehrere hintereinander liegende Bereiche eingeteilt, die auf die unterschiedlichen benötigten Solltemperaturen abgekühlt werden. Jeder dieser Bereiche ist mit wärmeleitenden Elementen 39 versehen, so dass die Reaktionszone 62 abnehmende Temperaturen besitzt. Die Kunststoffschmelze 4 wird dann beim Durchlaufen der Reaktionszone 62 in der Doppelbandpresse 1 nacheinander auf die verschiedenen Temperaturen abgekühlt. Falls es die Kunststoffschmelze erfordert, kann auch zwischen jeweils zwei Bereichen in der Druckplatte, die mit wärmeleitenden Elementen versehen sind, ein Bereich ohne wärmeleitende Elemente vorgesehen sein. In der Reaktionszone 62 folgt dann auf eine Kühlstrecke jeweils eine Strecke, wo die Zwischentemperatur gehalten wird, so dass ein stufenförmiges Abkühlen der Kunststoffschmelze erfolgt. Mit dieser Ausbildung kann auch die Abkühlgeschwindigkeit optimal den durch die Mikrostruktur der Kunststoffschmelze bedingten Erfordernissen angepasst werden. Als erfindungswesentlich ist jedoch hervorzuheben, dass in der Reaktionszone eine Abkühlung unter Flächendruck auf eine beliebige Endtemperatur erfolgt.

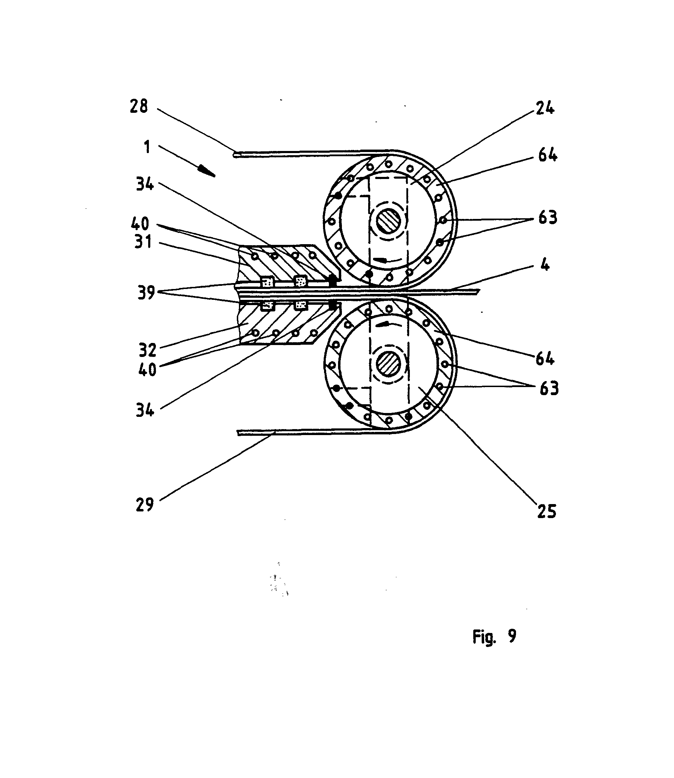

Es liegt auch im Rahmen der Erfindung die einlaufseitigen Umlenktrommeln 24 und 25 auf eine zweckmässige Temperatur aufzuheizen. Beispielsweise kann eine solche Temperatur zwischen der Endtemperatur der Kunststoffbahn 5 bei Verlassen der Doppelbandpresse 1 und der Temperatur der Kunststoffschmelze 4 bei Verlassen des Extruders 2 liegen. Wie in Fig. 9 gezeigt, besitzen die Umlenktrommeln 24, 25 im Zylindermantel 64 über die Breite der Umlenktrommeln 24, 25 reichende Kanäle 63. Diese Kanäle 63 werden von einem Wärmeträgeröl durchflossen, das Wärme an die Umlenktrommeln abgibt, von wo aus die Pressbänder 28, 29 mittels Wärmeleitung ebenfalls erwärmt werden. Die Pressbänder 24 und 25 besitzen dann ebenfalls diese erhöhte Temperatur und die Kunststoffschmelze 4 bleibt dann in der Einlaufzone 61 der Doppelbandpresse 1 im viskoelastischen Zustand. Damit lassen sich vorteilhafterweise die Eigenspannungen der Kunststoffbahn 5 noch weiter reduzieren und deren Masshaltigkeit steigern. Im Bereich der Druckplatten 31, 32 wird dann die Kunststoffbahn zusammen mit den Pressbänder 28, 29 abgekühlt. Es kann auch zweckmässig sein, die Druckplatten in einen Heiz- und Kühlbereich einzuteilen, wobei der den einlaufseitigen Umlenktrommeln 24, 25 zugewandte Bereich auf eine zweckmässige Temperatur beheizt ist und somit über die wärmeleitenden Elemente 39 die Kunststoffschmelze 4 weiter erwärmt. Dies kann als Ersatz für die Beheizung der einlaufseitigen Umlenktrommeln oder als Unterstützung derselben geschehen. Wichtig ist dies besonders im nachfolgenden Ausführungsbeispiel, wo mehrere extrudierte Thermoplastbahnen miteinander verschweisst werden. Der den auslaufseitigen Umlenktrommeln 26, 27 zugewandte Bereich der Reaktionszone 62 ist dann wieder, wie oben erläutert, als Kühlzone ausgebildet.

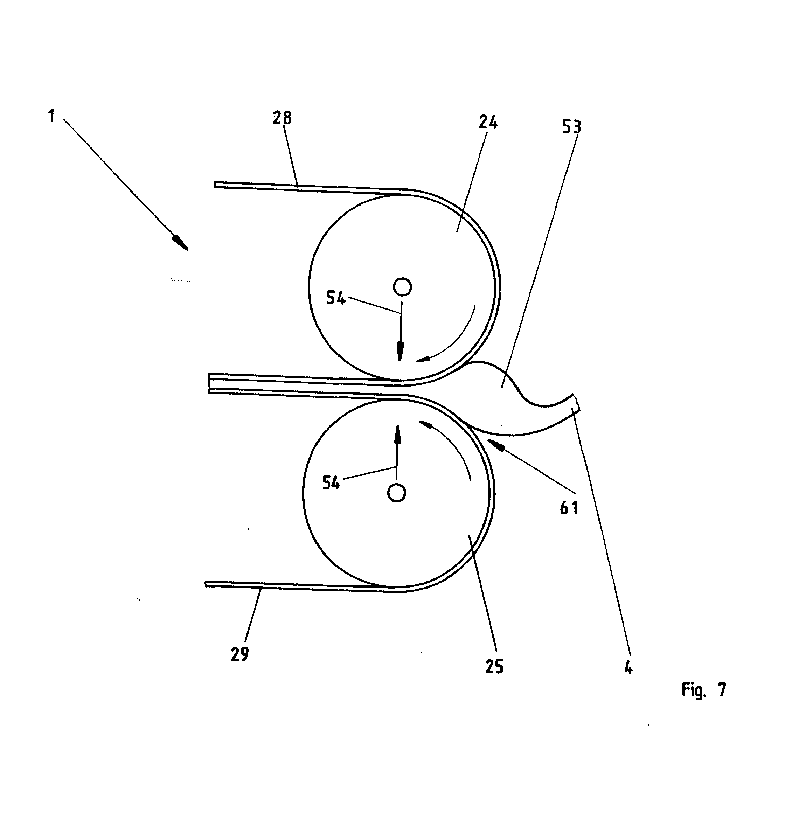

Bei der Extrusion der Kunststoffschmelze 4 kann, wie in Fig. 7 gezeigt, mit etwas Überschuss gearbeitet werden, so dass sich am Einlauf der Doppelbandpresse vor den Umlenktrommeln 24 und 25 ein Wulst 53 aus aufgestauter Kunststoffschmelze bildet. Damit wird vorteilhaft verhindert, dass Luft mit der Schmelze in die Reaktionszone 62 eindringt und eine fehlerhafte Kunststoffbahn mit Poren erzeugt. Vorteilhafterweise kann die Extrusion der Menge der Kunststoffschmelze 4 auch in Abhängigkeit von der Grösse des Wulstes 53 geregelt werden. Damit werden während der gesamten Verarbeitungsdauer gleichmässige Verhältnisse erreicht. Um auch die durch das Extrudieren in der Kunststoffschmelze bereits gelöste Luft austreiben zu können, können die einlaufseitigen Umlenktrommeln 24, 25 in Pfeilrichtung 54 aufeinander zu verstellbar sein, was eine zusätzliche Kalandrierung der Kunststoffschmelze 4 und ein Austreten der Luft entgegen der Vorlaufrichtung der Kunststoffschmelze bewirkt. Die Kalandrierung der Kunststoffschmelze 4 in der Einlaufzone 61 durch Regelung des Walzenspaltes kann auch wichtig sein, um eine Volumenkontraktion der abkühlenden Schmelze auszugleichen und so die Masshaltigkeit der Kunststoffbahn 5 zu gewährleisten. Die Ausbildung der einlaufseitigen Umlenktrommeln einer Doppelbandpresse zur Kalandrierung ist an sich bekannt und kann nach der Offenlegungsschrift DE-OS 34 02 751 erfolgen.

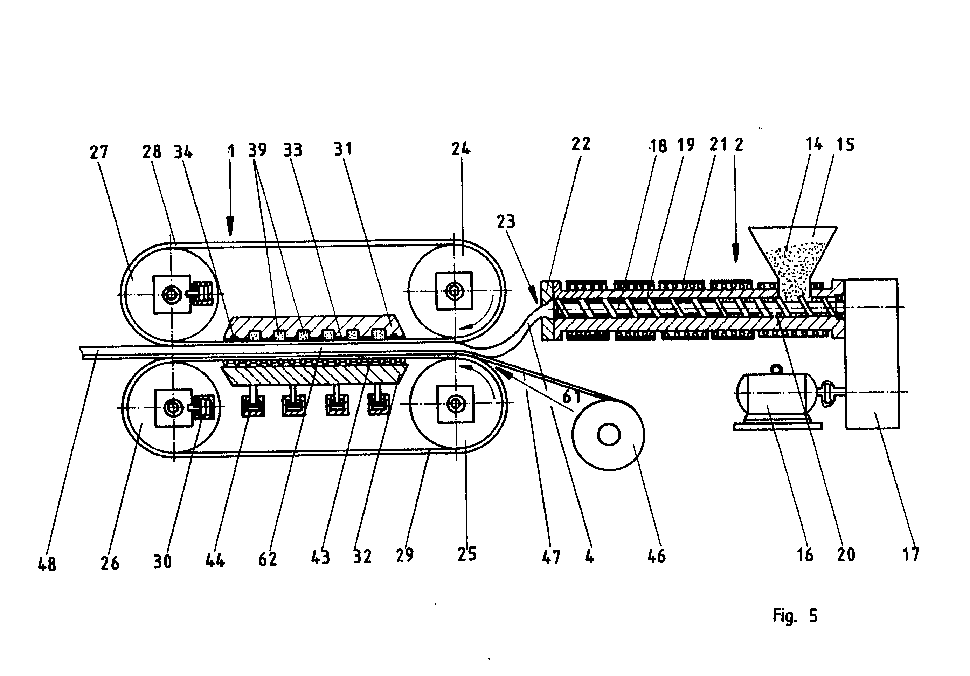

Eine weitere nach dem erfindungsgemässen Verfahren arbeitende Vorrichtung, die zur Herstellung von kunststoffbeschichteten Trägerbahnen dient, ist in Fig. 5 gezeigt. Diese Vorrichtung besitzt einen Extruder 2 mit einer Breitschlitzdüse 23 und eine Doppelbandpresse 1. Vor der Doppelbandpresse 1 ist in der Nähe der Umlenktrommel 25 eine Rolle 46 angebracht, die sich auf einer bekannten, in der Zeichnung nicht dargestellten Abwickeleinheit befindet. Von der Rolle 46 wird eine Trägerbahn 47, die beispielsweise aus einem Papier, Metall oder Gewebe bestehen kann, abgewickelt und in der Einlaufzone 61 der Doppelbandpresse 1 mit der Kunststoffschmelze 4 aus dem Extruder 2 zusammengeführt. Ebenso ist es möglich, dass die Trägerbahn 47 aus einem gestreuten Faservlies besteht. Falls nötig, kann die Trägerbahn 47 zwischen der Rolle 46 und dem Einlauf in die Doppelbandpresse mittels einer Infrarotstrahlerheizung oder Warmluft vorgeheizt werden. Beim Durchlauf der Kunststoffschmelze 4 auf der Trägerbahn 47 durch die Reaktionszone 62 wird die Kunststoffschmelze 4 unter Flächendruck abgekühlt und geht mit der Trägerbahn 47 einen Verbund ein. Nach dem Verlassen der Doppelbandpresse 1 kann die beschichtete Trägerbahn 48 auf eine Rolle in einer Aufwickeleinheit, wie sie in Fig. 1 gezeigt ist, aufgewickelt werden.

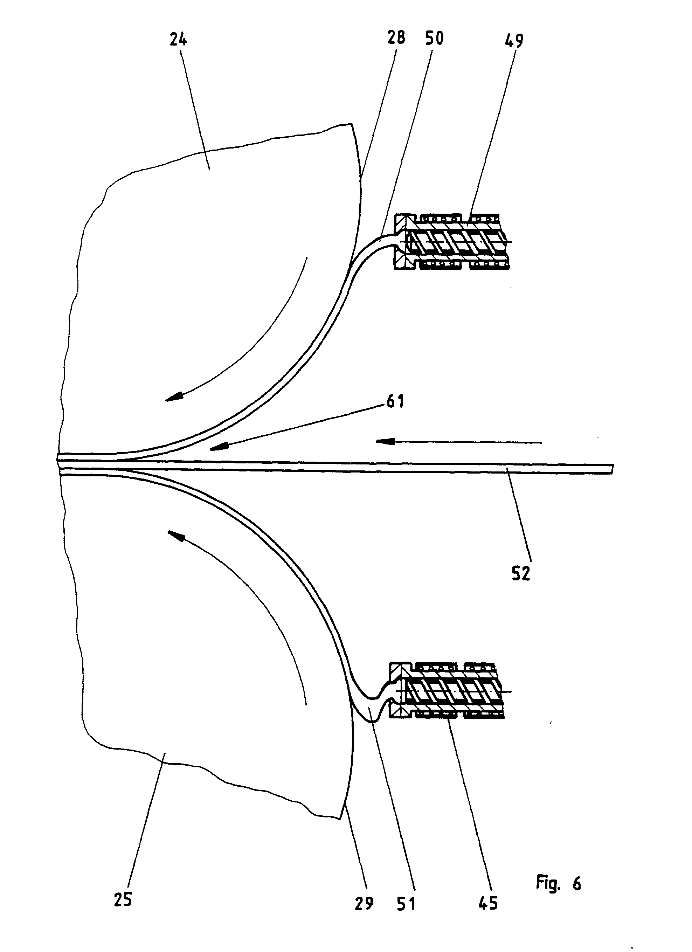

Die Herstellung einer zweiseitig mit Kunststoff beschichteten Trägerbahn wird in Fig. 6 gezeigt, wo die Einlaufzone 61 der Doppelbandpresse 1 vergrössert dargestellt ist. In der Nähe der oberen Einlauftrommel 24 ist ein oberer Extruder 49 angebracht, der eine Kunststoffschmelze 50 auf das Pressband 28 extrudiert. Diese heisse Kunststoffschmelze 50 haftet am Pressband 28 und wird von diesem in die Doppelbandpresse 1 transportiert. Ein unterer Extruder 45 ist in der Nähe der unteren Einlauftrommel 25 angebracht und extrudiert eine Kunststoffschmelze 51 auf das Pressband 29, so dass diese Kunststoffschmelze 51 ebenfalls in die Doppelbandpresse 1 transportiert wird. Eine von einer Rolle abgezogene Trägerbahn 52 läuft zwischen den beiden Kunststoffschmelzen 50 und 51 auf die Doppelbandpresse 1 zu und wird in der Einlaufzone 61 mit den Kunststoffschmelzen 50, 51 so zusammengeführt, dass auf jeder Oberfläche der Trägerbahn 52 sich eine Kunststoffschmelze befindet. In der Reaktionszone 62 der Doppelbandpresse 1 wird die beidseitig beschichtete Trägerbahn dann wieder unter Flächendruck abgekühlt.

Die in Fig. 2 gezeigte Vorrichtung ist auch geeignet zur Einarbeitung von Füllstoffen in die Kunststoffbahn 5, wie Glas- oder Metallfasern. Dazu wird zwischen dem Extruderwerkzeug 22 und der einlaufseitigen Umlenktrommel 24 eine Streuvorrichtung für die Fasern angebracht. Diese Streuvorrichtung streut die entsprechenden Fasern auf die Kunststoffschmelze 4, die dann soweit in die Schmelze einsinken, dass sie von der thermoplastischen Kunststoffmasse umhüllt sind. Die Kunststoffschmelze 4 mit den eingebetteten Fasern wird dann, wie weiter oben beschrieben, in der Doppelbandpresse 1 zu einer mit Füllstoff verstärkten Kunststoffbahn 5 abgekühlt.

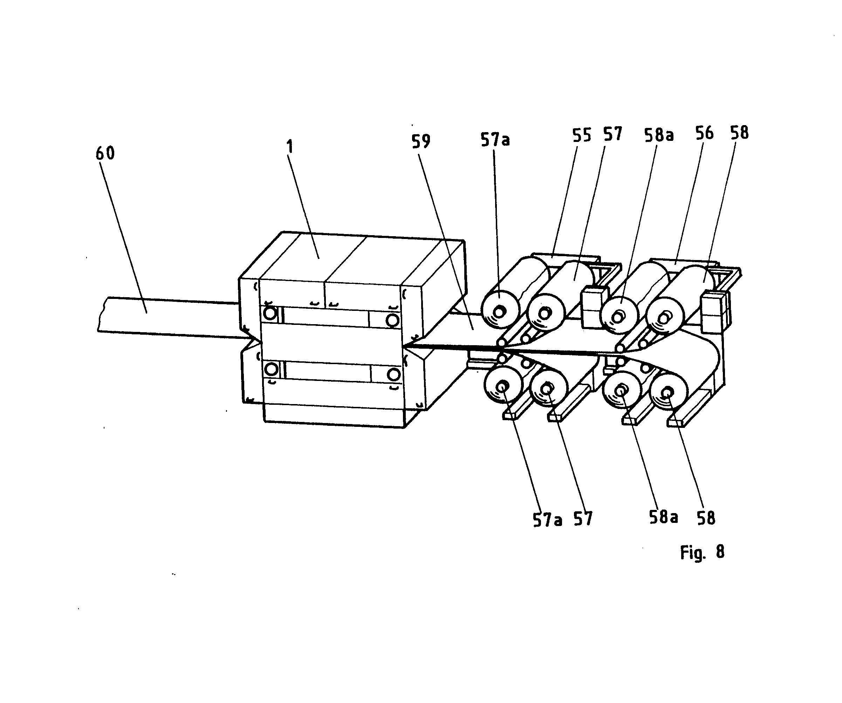

Eine weitere Vorrichtung zur Durchführung des erfindungsgemässen Verfahrens ist in Fig. 8 gezeigt. Diese Vorrichtung dient zum Verschweissen einzelner thermoplastischer Kunststoffbahnen oder -folien zu einer kompakten Kunststoffbahn. Die einzelnen Kunststoffbahnen können aus herkömmlich extrudierten und kalandrierten Thermoplastfolien bestehen, die bis zur weiteren Verarbeitung auf Rollen zwischengelagert wurden. Vor der Doppelbandpresse 1 sind Abwickeleinheiten 55, 56 aufgestellt, in denen sich Rollen 57 und 58 mit den Thermoplastfolien befinden. Diese einzelnen Thermoplastfolien werden von den Rollen 57, 58 abgezogen, vor der Doppelbandpresse 1 zu einer geschichteten Bahn 59 zusammengeführt und in die Doppelbandpresse 1 eingeführt. Für jede Rolle 57, 58 ist eine Ersatzrolle 57a, 58a vorgesehen, so dass am Ende einer Rolle die Produktion durch Einfädeln der entsprechenden Ersatzrolle ohne Unterbrechung aufrechterhalten werden kann. Falls erforderlich kann vor die Doppelbandpresse 1 eine Infrarotstrahlerheizung zum Vorheizen der geschichteten Bahn 59 oder der einzelnen Thermoplastfolien angebracht sein.

Um die einzelnen Thermoplastfolien miteinander verschweissen zu können, müssen sie zuerst in der Einlaufzone soweit erwärmt werden, bis sie im viskoelastischen Zustand sind. Dazu sind die einlaufseitigen Umlenktrommeln der Doppelbandpresse 1, wie weiter oben anhand der Fig. 9 beschrieben, beheizt, so dass die einzelnen Folien bei Kontakt mit den Pressbändern 28, 29 erwärmt werden. Sollte dies nicht ausreichen, so kann der einlaufseitige Bereich der Reaktionszone mittels wärmeleitender Elemente von der Druckplatte her ebenfalls beheizt sein, wie weiter oben ausführlich beschrieben ist. Sobald die Folien eine dem viskoelastischen Zustand entsprechende Temperatur besitzen, verschweissen die einzelnen Folien unter dem Flächendruck in der Reaktionszone miteinander zu einer kompakten Bahn.

Während des weiteren Durchlaufs durch die Reaktionszone der Doppelbandpresse 1 wird diese geschichtete, verschweisste Bahn 59 entsprechend dem erfindungsgemässen Verfahren in der Reaktionszone unter Flächendruck abgekühlt. Dazu ist die Druckplatte in der Doppelbandpresse wiederum mit wärmeleitenden Elementen entsprechend den Fig. 3 und 4 versehen und mindestens der den auslaufseitigen Umlenktrommeln zugewandte Bereich der Druckplatte wird gekühlt. Falls erforderlich kann die Druckplatte auch wieder in einzelne Bereiche mit unterschiedlichen Temperaturen eingeteilt sein oder ein stufenförmiges Abkühlen ermöglichen. Am Auslauf der Doppelbandpresse 1 erhält man eine abgekühlte, kompakte Kunststoffbahn 60 aus thermoplastischem Material, die, wie in Fig. 1 dargestellt, aufgewickelt oder in einzelne Platten aufgeteilt werden kann.

Ebenfalls möglich ist auch eine Kalandrierung der geschichteten Bahn 59 mittels der einlaufseitigen Umlenktrommeln, entsprechend der Fig. 7. Falls gewünscht kann mit den einzelnen Thermoplastfolien zur Verstärkung auch eine Gewebebahn aus Glasfasergewebe, Textilgewebe, usw. einlaufen, um so zu einer verstärkten Thermoplastbahn 60 zu führen. Obwohl die einzelnen thermoplastischen Folien oder Bahnen auf den Rollen 57, 58 konventionell extrudiert und kalandriert sind, ist hervorzuheben, dass die kompakte Kunststoffbahn 60, bei denen die Folien miteinander verschweisst sind, die erfindungsgemässen Vorteile, wie reduzierte Eigenspannungen, eine presspolierte Oberfläche, gute Masshaltigkeit, usw. aufweist.

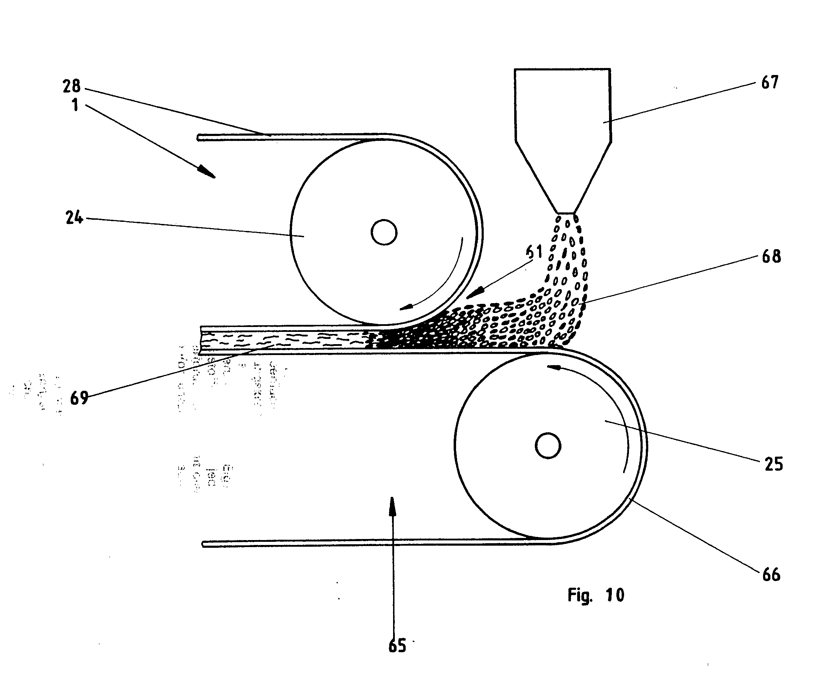

In Fig. 10 ist eine Ausführungsform des erfindungsgemässen Verfahrens gezeigt, bei dem extrudierte Thermoplastflocken zu einer Kunststoffbahn verarbeitet werden. Die untere Bandeinheit 65 der Doppelbandpresse 1 ist etwas vorgezogen, so dass das untere Pressband 66 etwas aus der Einlaufzone 61 heraussteht. Kurz vor der Einlaufzone 61, über dem Pressband 66, ist eine Streuvorrichtung 67 angebracht, die extrudierte Thermoplastflocken 68 auf das untere Pressband 66 zu einem Vlies streut. Dieses Vlies wird mit dem Pressband 66 in die Einlaufzone 61 transportiert, dort verdichtet und soweit erwärmt, wie bereits weiter oben erläutert, dass es eine zusammenhängende, viskoelastische Kunststoffbahn 69 bildet. Anschliessend beim weiteren Durchlauf durch die Doppelbandpresse 1 wird die Kunststoffbahn 69 dann wieder unter Flächendruck abgekühlt. Es ist auch hier wiederum eine Kalandrierung der gestreuten Bahn mittels der einlaufseitigen Umlenktrommel 24 möglich. Falls gewünscht, kann auch ein Faservlies in die Doppelbandpresse 1 einlaufen und die extrudierten Thermoplastflocken oder -pulver können wie beschrieben vor der Einlaufzone 61 in dieses Faservlies eingestreut werden. Die bereits genannten erfindungsgemässen Vorteile für die abgekühlte Kunststoffbahn sind auch bei dieser Ausführungsform wieder vorhanden.

In vorstehender Beschreibung sind verschiedene Ausführungsbeispiele für Vorrichtungen zur Durchführung des erfindungsgemässen Verfahrens beschrieben. Wichtig ist bei allen diesen Ausführungsformen, dass der thermoplastische Kunststoff unter Flächendruck abgekühlt wird, wozu die erfindungsgemässen Vorrichtungen mit einer Doppelbandpresse mit wärmeleitenden Elementen in der Druckplatte ausgestattet sind.

## Patentansprüche

1. Verfahren zum kontinuierlichen Herstellen von thermoplastischen Kunststoffbahnen, insbesondere für die Weiterverarbeitung zu Platten oder Folien, aus mindestens einer extrudierten, auf Verarbeitungstemperatur erwärmten Thermoplastbahn, die in erwärmtem Zustand zwischen zwei kontinuierlich bewegten, über je zwei Umlenktrommeln endlos umlaufenden Preßbändern geführt, zwischen den Preßbändern abgekühlt und dabei an ihrer Oberfläche kalibriert und geglättet wird, wobei die Abkühlung der Thermoplastbahn von der Verarbeitungstemperatur bis zu der Endtemperatur, bei der das Glätten und Kalibrieren der Oberfläche beendet wird, unter Einwirkung von über Druckplatten auf die Innenseiten der Preßbänder ausgeübten Flächendruck vorgenommen wird, dadurch gekennzeichnet, daß der Flächendruck gleichmäßig von den Druckplatten hydraulisch oder mittels ortsfest angeordneter Rollen mechanisch auf die Innenseiten der Preßbänder ausgeübt wird, die Druckplatten auf einer niedrigeren Temperatur als die Endtemperatur der Thermoplastbahn gehalten werden, um so ein Temperaturgefälle zwischen Thermoplastbahn, Preßband und Druckplatte aufrechtzuerhalten, die Thermoplastbahn abgekühlt wird, indem Wärme aus der Thermoplastbahn über das Preßband auf die Druckplatte mittels Wärmeleitung abgeführt wird und der Flächendruck mindestens während der gesamten Dauer der Abkühlung der Thermoplastbahn zwischen den Preßbändern einwirkt.

2. Verfahren nach Anspruch 1, dadurch gekennzeichnet, daß eine einzige zusammenhängende, aus einer thermoplastischen Kunststoffschmelze bestehende Thermoplastbahn extrudiert, zwischen die Preßbänder eingeführt und zwischen den Preßbändern unter Flächendruck abgekühlt wird.

3. Verfahren nach Anspruch 2, dadurch gekennzeichnet, daß die thermoplastische Kunststoffschmelze an der Stelle, ab der der Flächendruck einzuwirken beginnt, einen Wulst von überschüssiger Schmelze bildet.

4. Verfahren nach Anspruch 3, dadurch gekennzeichnet, daß die Extrusion der Kunststoffschmelze in Abhängigkeit von der Größe des Wulstes geregelt wird.

5. Verfahren nach Anspruch 2, dadurch gekennzeichnet, daß die thermoplastische Kunststoffschmelze keinen Wulst an der Stelle bildet, an der der Flächendruck zu wirken beginnt.

6. Verfahren nach Anspruch 1, dadurch gekennzeichnet, daß mehrere einzelne aus thermoplastischem Kunststoff bestehende Bahnen zu einer aus aufeinanderliegenden Schichten bestehenden Thermoplastbahn zusammengeführt werden, die Thermoplastbahn dann zwischen die Preßbänder eingeführt wird, die Bahnen vor oder nach der Einführung zwischen die Preßbänder auf Verarbeitungstemperatur vorgewärmt werden und die Thermoplastbahn anschließend zwischen den Preßbändern unter Flächendruck abgekühlt wird.

7. Verfahren nach Anspruch 1, dadurch gekennzeichnet, daß extrudierte Thermoplastflocken zu einer Thermoplastbahn gestreut werden, diese Thermoplastbahn auf Verarbeitungstemperatur erwärmt, vor oder nach der Vorwärmung zwischen die Preßbänder eingeführt und anschließend zwischen den Preßbändern unter Flächendruck abgekühlt wird.

8. Verfahren nach Anspruch 7, dadurch gekennzeichnet, daß die Thermoplastflocken in ein Faservlies eingestreut werden.

9. Verfahren nach einem der Ansprüche 1 bis 8, dadurch gekennzeichnet, daß die Thermoplastbahn vor dem Abkühlen zusätzlich erwärmt wird.

10. Verfahren nach einem der Ansprüche 1 bis 9, dadurch gekennzeichnet, daß die Abkühlung der Thermoplastbahn bis zu der Endtemperatur, bei der die Abkühlung zwischen den Preßbändern unter Flächendruck beendet wird, in mehreren Schritten mit jeweils einer bestimmten Haltezeit für die jeweilige Zwischentemperatur vorgenommen wird.

11. Verfahren nach einem der Ansprüche 1 bis 10, dadurch gekennzeichnet, daß während des Abkühlens der Thermoplastbahn zwischen den Preßbändern unter Flächendruck eine Strukturierung in mindestens eine der Oberflächen der Thermoplastbahn eingebracht wird.

12. Verfahren nach einem der Ansprüche 1 bis 11, dadurch gekennzeichnet, daß eine Trägerbahn mit der Thermoplastbahn zusammengeführt wird, bevor dieselbe zwischen den Preßbändern unter Flächendruck abgekühlt wird.

13. Verfahren nach einem der Ansprüche 1 bis 11, dadurch gekennzeichnet, daß zwei Thermoplastbahnen mit einer Trägerbahn so zusammengeführt werden, daß die Trägerbahn sich zwischen den beiden Thermoplastbahnen befindet und diese Bahnen anschließend zwischen den Preßbändern unter Flächendruck abgekühlt werden.

14. Verfahren nach Anspruch 12 oder 13, dadurch gekennzeichnet, daß die Trägerbahn vor dem Zusammenführen mit der Thermoplastbahn vorgewärmt wird.

15. Verfahren nach Anspruch 14, dadurch gekennzeichnet, daß die Vorwärmung der Trägerbahn bis auf die Verarbeitungstemperatur der Thermoplastbahn erfolgt.

16. Verfahren nach einem der Ansprüche 12 bis 15, dadurch gekennzeichnet, daß die Trägerbahn aus einem Glasfasergewebe besteht.

17. Verfahren nach einem der Ansprüche 12 bis 15, dadurch gekennzeichnet, daß die Trägerbahn aus einem Textilgewebe oder einer Papierbahn besteht.

18. Verfahren nach einem der Ansprüche 12 bis 15, dadurch gekennzeichnet, daß die Trägerbahn aus einem Metallgewebe besteht.

19. Verfahren nach einem der Ansprüche 12 bis 15, dadurch gekennzeichnet, daß die Trägerbahn aus einem Faservlies besteht.

20. Verfahren nach einem der Ansprüche 1 bis 11, dadurch gekennzeichnet, daß vor der Abkühlung der Thermoplastbahn zwischen den Preßbändern unter Flächendruck Füllstoffe in diese eingearbeitet werden.

21. Verfahren nach Anspruch 20, dadurch gekennzeichnet, daß die Füllstoffe aus Glasfasern bestehen.

22. Verfahren nach Anspruch 20, dadurch gekennzeichnet, daß die Füllstoffe aus Textilfasern bestehen.

23. Verfahren nach Anspruch 20, dadurch gekennzeichnet, daß die Füllstoffe aus Metallfasern bestehen.

24. Vorrichtung zur Durchführung des Verfahrens nach einem der Ansprüche 1 bis 23, mit einem Extruder zur Herstellung einer extrudierten, kontinuierlich vorlaufenden, auf Verarbeitungstemperatur befindlichen Thermoplastbahn oder mit in Abwickeleinrichtungen befindlichen Rollen, von denen extrudierte Thermoplastbahnen abgezogen und zu einer geschichteten, kontinuierlich vorlaufenden Thermoplastbahn zusammengeführt werden oder mit einer Streueinrichtung, in der extrudierte Thermoplastflocken bzw. -pulver zu einer kontinuierlich vorlaufenden Thermoplastbahn gestreut werden und einer in Vorlaufrichtung hinter dem Extruder, den Abwickeleinrichtungen oder der Streueinrichtung angeordneten Kalibrier- und Glätteinrichtung, in die die Thermoplastbahn einläuft, wobei die als Doppelbandpresse ausgebildete Kalibrier- und Glätteinrichtung jeweils ein oberes und ein unteres, über jeweils zwei in einem starren Pressengestell drehbar gelagerten Umlenktrommeln geführtes, endloses Preßband besitzt, auf deren Innenseiten ein von Druckplatten ausgeübter Flächendruck einwirkt und mit kühlbar ausgebildeten Druckplatten, um die Thermoplastbahn von der Verarbeitungstemperatur bis zu der Endtemperatur, bei der das Glätten und Kalibrieren der Oberfläche der Thermoplastbahn beendet wird, abzukühlen, dadurch gekennzeichnet, daß von den an den Innenseiten der Preßbänder (28, 29), mit einem Abstand zu den Preßbändern (28, 29) im Pressengestell der Doppelbandpresse (1) angeordneten Druckplatten (31, 32) ein gleichmäßiger Flächendruck hydraulisch mittels eines in dem Raum (33), der nach oben und unten von der Druckplatte (31) bzw. der Preßbandinnenseite (28) und zu den Seiten von einer in sich geschlossenen Dichtung (34) begrenzt ist, befindlichen fluiden Druckmediums oder mechanisch mittels ortsfest, zwischen der Druckplatte (32) und der Preßbandinnenseite (29) angeordneten Rollen (43) auf die Innenseiten der Preßbänder (28, 29) ausgeübt wird, daß wenigstens in einem Bereich in den Druckplatten (31, 32) Kanäle (40) angebracht sind, die von einer Kühlflüssigkeit durchströmt werden, um die Druckplatte (31, 32) auf einer niedrigeren Temperatur als die Endtemperatur der Thermoplastbahn (5) bei Verlassen der Doppelbandpresse (1) zu halten und in dem Bereich der Druckplatte (31, 32), in dem sich die Kanäle (40) befinden, wärmeleitende Elemente (39) angebracht sind, die einerseits das Preßband (28, 29) der Doppelbandpresse (1) schleifend berühren und andererseits unter Ausbildung eines guten Wärmeleitkontakts mit der Druckplatte (31, 32) verbunden sind, so daß Wärme aus der Thermoplastbahn (4, 59, 69) über das Preßband (28, 29) und die wärmeleitenden Elemente (39) auf die Druckplatte (31, 32) mittels Wärmeleitung abgeführt wird.

25. Vorrichtung nach Anspruch 24, dadurch gekennzeichnet, daß die wärmeleitenden Elemente (39) aus Kupfer bestehen.

26. Vorrichtung nach Anspruch 24 oder 25, dadurch gekennzeichnet, daß der Extruder (2) vor der Doppelbandpresse (1) so angebracht ist, daß die von dem Extruder (2) extrudierte Kunststoffschmelze (4) direkt in die Doppelbandpresse (1) einläuft.

27. Vorrichtung nach Anspruch 26, dadurch gekennzeichnet, daß der Extruder (2) eine Breitschlitzdüse (3) als Extruderwerkzeug (22) besitzt.

28. Vorrichtung nach Anspruch 26 oder 27, dadurch gekennzeichnet, daß der Extruder (2) so vor der Doppelbandpresse (1) angebracht ist, daß die Kunststoffschmelze (4) in die Mitte des Walzenspaltes der Einlaufzone (61) extrudiert wird, der durch die Preßbänder (28, 29) an den einlaufseitigen Umlenktrommeln (24, 25) der Doppelbandpresse (1) gebildet wird.

29. Vorrichtung nach Anspruch 26 oder 27, dadurch gekennzeichnet, daß die Kunststoffschmelze (4) auf das Preßband (28 oder 29) an der oberen oder unteren Umlenktrommel (24 oder 25) außerhalb des Walzenspaltes der Einlaufzone (61) aufgebracht wird und von dem jeweiligen Preßband (28 oder 29) in die Reaktionszone (62) der Doppelbandpresse (1) transportiert wird.

30. Vorrichtung nach Anspruch 28 oder 29, dadurch gekennzeichnet, daß die von dem Extruder (2) extrudierte Kunststoffschmelze (4) vor dem Walzenspalt in der Einlaufzone (61) einen Wulst bildet.

31. Vorrichtung nach Anspruch 28 oder 29, dadurch gekennzeichnet, daß die von dem Extruder (2) extrudierte Kunststoffschmelze (4) vor dem Walzenspalt in der Einlaufzone (61) keinen Wulst bildet.

32. Vorrichtung nach einem der Ansprüche 26 bis 31, dadurch gekennzeichnet, daß eine Abwikkeleinrichtung mit einer Rolle (46) für eine Trägerbahn (47) vor der Doppelbandpresse (1) angebracht ist, die Trägerbahn (47) von der Rolle abgezogen und ein- oder beidseitig mit der Kunststoffschmelze (4) in der Einlaufzone (61) der Doppelbandpresse (1) zusammengeführt wird.

33. Vorrichtung nach Anspruch 32, dadurch gekennzeichnet, daß zwischen der Rolle (46) und der Doppelbandpresse (1) eine Infrarotstrahlerheizung oder eine mit Warmluft arbeitende Heizung zum Vorwärmen der Trägerbahn (47) angeordnet ist.

34. Vorrichtung nach einem der Ansprüche 26 bis 31, dadurch gekennzeichnet, daß eine Streueinrichtung zum Einstreuen von Füllstoffen in die Kunststoffschmelze (4) vor der Doppelbandpresse (1) angebracht ist.

35. Vorrichtung nach Anspruch 24 oder 25, dadurch gekennzeichnet, daß vor der Doppelbandpresse (1) Abwickeleinheiten (55, 56) mit Rollen (57, 58) und Ersatzrollen (57a, 58a) für extrudierte Thermoplastbahnen oder -folien angeordnet sind, diese Bahnen von den Rollen abgezogen, zu einer geschichteten Bahn (59) zusammengeführt und direkt in die Doppelbandpresse (1) eingeführt werden.

36. Vorrichtung nach Anspruch 35, dadurch gekennzeichnet, daß zwischen den Abwickeleinheiten (55, 56) und der Doppelbandpresse (1) eine Infrarotstrahlerheizung zum Erwärmen der Thermoplastbahnen oder -folien angebracht ist.

37. Vorrichtung nach Anspruch 24 oder 25, dadurch gekennzeichnet, daß die Streuvorrichtung (67) für extrudierte Thermoplastflocken (68) oder -pulver vor der Doppelbandpresse (1) in der Nähe der Einlaufzone (61) so angebracht ist, daß die Thermoplastflocken (68) oder das -pulver in ein Faservlies eingestreut werden, das in die Doppelbandpresse (1) einläuft.

38. Vorrichtung nach Anspruch 24 oder 25, dadurch gekennzeichnet, daß die untere Bandeinheit (65) der Doppelbandpresse (1) so vorgezogen ist, daß sie aus der Einlaufzone (61) heraussteht und über dieser unteren Bandeinheit die Streuvorrichtung (67) zum Aufstreuen der extrudierten Thermoplastflocken (68) vor der Einlaufzone (61) so angebracht ist, daß die Bahn aus gestreuten Thermoplastflocken (68) vom Preßband (66) der unteren Bandeinheit (65) in die Reaktionszone (62) der Doppelbandpresse (1) transportiert wird.

39. Vorrichtung nach einem der Ansprüche 24 bis 38, dadurch gekennzeichnet, daß die einlaufseitigen Umlenktrommeln (24, 25) der Doppelbandpresse (1) beheizt sind und damit die Preßbänder (28, 29, 66) bis in die Einlaufzone (61) auf erhöhte Temperatur erwärmen, so daß die Thermoplastbahn (4, 59, 69) durch die mittels der Wärmekapazität der Preßbänder (28, 29, 66) gespeicherte Wärme erwärmt wird.

40. Vorrichtung nach einem der Ansprüche 24 bis 39, dadurch gekennzeichnet, daß die Druckplatte (31, 32) aus mindestens zwei Teilen besteht, beide Teile mit Kanälen (40) und wärmeleitenden Elementen (39) versehen sind, in den Kanälen (40) des Teils der Druckplatte (31, 32), der dem einlaufseitigen Bereich zugeordnet ist, eine Wärmeträgerflüssigkeit zur Erwärmung dieses Teils fließt, womit dort zusätzliche Wärme auf die Thermoplastbahn (4, 59, 69) übertragen wird und in den Kanälen (40) des Teils der Druckplatte (31, 32), der dem auslaufseitigen Bereich zugeordnet ist, eine Kühlflüssigkeit zur Kühlung dieses Teils fließt, so daß dort Wärme von der Thermoplastbahn (4, 59, 69) an diesen Teil der Druckplatte (31, 32) abgegeben wird.

41. Vorrichtung nach einem der Ansprüche 24 bis 40, dadurch gekennzeichnet, daß der Bereich der Druckplatte (31, 32), in dem gekühlt wird, wiederum in mehrere Bereiche eingeteilt ist, die verschiedene Temperaturen zwischen der Verarbeitungstemperatur und der Endtemperatur besitzen.

42. Vorrichtung nach einem der Ansprüche 24 bis 41, dadurch gekennzeichnet, daß die Doppelbandpresse (1) mindestens ein strukturiertes Preßband zum Einprägen einer Struktur in die Oberfläche der Thermoplastbahn (4, 59, 69) besitzt.

43. Vorrichtung nach einem der Ansprüche 24 bis 41, dadurch gekennzeichnet, daß eine Abwikkelvorrichtung vor der Doppelbandpresse (1) zum Abziehen eines oder zweier bahnförmiger Strukturträger angeordnet ist, die mit der Thermoplastbahn (4, 59, 69) durch die Doppelbandpresse (1) geführt werden und mit der strukturierten Oberfläche auf einer Oberfläche der Thermoplastbahn (4, 59, 69) aufliegen, so daß sich deren Struktur in die Oberfläche der Thermoplastbahn (4, 59, 69) einprägt.

44. Vorrichtung nach einem der Ansprüche 24 bis 43, dadurch gekennzeichnet, daß die einlaufseitigen Umlenktrommeln (24, 25) der Doppelbandpresse (1) unter Druck gegeneinander verstellt werden können, um eine Kalandrierung der Thermoplastbahn (4, 59, 69) zu bewirken.

## Revendications

1. Procédé de fabrication continue de feuilles thermoplastiques, notamment pour la transformation en plaques et en feuilles, constituées d'au moins une feuille thermoplastique extrudée chauffée à la température de transformation, qui est guidée par des courroies de compression sans fin tournant en continu autour de deux cylindres de renvoi, qui est refroidie entre les courroies de compression et est calibrée et lissée en surface, le refroidissement de la feuille thermoplastique de la température de transformation à la température finale, à laquelle est terminé le lissage et le calibrage de la surface, étant réalisé par action de la pression plane exercée par les plaques de compression sur les faces internes des courroies de compression, caractérisé en ce qu'on applique régulièrement la pression plane des plaques de compression hydrauliquement ou mécaniquement au moyen de rouleaux logés, sur la face interne des courroies de compression, on maintient les plaques de compression à une température inférieure à la température finale de la feuille thermoplastique, de façon à réaliser un gradient de température entre la feuille thermoplastique, la courroie de compression et la plaque de compression, ce qui refroidit la feuille thermoplastique en éliminant la chaleur de la feuille thermoplastique via la courroie de compression vers la plaque de compression par conduction thermique, et on laisse exercer la pression plane au moins pendant toute la durée du refroidissement de la feuille thermoplastique entre les courroies de compression.

2. Procédé selon la revendication 1, caractérisé en ce qu'on extrude une feuille de thermoplastique d'un seul tenant constituée de masse fondue de matière plastique, on l'introduit entre les courroies de compression et on la refroidit entre les courroies de compression sous pression plane.

3. Procédé selon la revendication 2, caractérisé en ce que la masse fondue de thermoplastique forme un bourrelet de masse fondue en excès à l'endroit où la pression plane commence à s'appliquer.

4. Procédé selon la revendication 3, caractérisé en ce qu'on règle l'extrusion de masse fondue de matière plastique en fonction de l'importance du bourrelet.

5. Procédé selon la revendication 2, caractérisé en ce que la masse fondue de matière thermoplastique ne forme pas de bourrelet à l'endroit où la pression plane commence à s'appliquer.

6. Procédé selon la revendication 1, caractérisé en ce qu'on fait passer ensemble plusieurs feuilles individuelles de matière thermoplastique pour constituer une feuille thermoplastique composée de couches superposées, la feuille thermoplastique est introduite entre les courroies de compression, les feuilles sont préchauffées avant et après l'introduction entre les courroies de compression à la température de transformation et on refroidit ensuite la feuille thermoplastique entre les courroies de compression sous pression plane.

7. Procédé selon la revendication 1, caractérisé en ce qu'on distribue des granulés thermoplastiques extrudés pour donner une feuille thermoplastique, cette feuille thermoplastique est portée à la température de transformation, on l'introduit avant ou après le préchauffage entre les courroies de compression et ensuite on refroidit entre les courroies de compression sous pression plane.

8. Procédé selon la revendication 7, caractérisé en ce qu'on distribue les granulés thermoplastiques sur un non tissé.

9. Procédé selon l'une des revendications 1 à 8, caractérisé en ce qu'on réchauffe en plus la feuille thermoplastique avant le refroidissement.

10. Procédé selon l'une des revendications 1 à 9, caractérisé en ce qu'on réalise le refroidissement de la feuille thermoplastique jusqu'à la température finale, à laquelle le refroidissement est terminé entre les courroies de compression sous pression plane, en plusieurs étapes avec chaque fois un temps de palier déterminé pour chaque température intermédiaire.

11. Procédé selon l'une des revendications 1 à 10, caractérisé en ce que pendant le refroidissement de la feuille thermoplastique entre les courroies de compression sous pression plane, on réalise une structuration sur au moins l'une des faces de la feuille thermoplastique;

12. Procédé selon l'une des revendications 1 à 11, caractérisé en ce qu'on fait passer une courroie support avec la feuille thermoplastique, avant que celle-ci ne soit refroidie entre les courroies de compression sous pression plane.

13. Procédé selon l'une des revendications 1 à 11, caractérisé en ce qu'on fait passer deux feuilles thermoplastiques avec une courroie support, de façon à ce que la courroie support se trouve entre les deux feuilles thermoplastiques et que ces feuilles soient finalement refroidies entre les courroies de compression sous pression plane.

14. Procédé selon la revendication 12 ou 13, caractérisé en ce qu'on préchauffe la courroie support avant l'assemblage avec la feuille thermoplastique.

15. Procédé selon la revendication 14, caractérisé en ce qu'on réalise le préchauffage de la courroie support jusqu'à la température de transformation de la feuille thermoplastique.

16. Procédé selon l'une des revendications 12 à 15, caractérisé en ce que la courroie support est constituée d'un tissu de fibres de verre.

17. Procédé selon l'une des revendications 12 à 15, caractérisé en ce que la courroie support est constituée d'un tissu textile ou d'une feuille de papier.

18. Procédé selon l'une des revendications 12 à 15, caractérisé en ce que la courroie support est constituée d'une toile métallique.

19. Procédé selon l'une des revendications 12 à 15, caractérisé en ce que la courroie support est en non tissé.

20. Procédé selon l'une des revendications 1 à 11, caractérisé en ce qu'avant le refroidissement de la feuille thermoplastique entre les courroies de compression sous pression plane, on y incorpore des charges.

21. Procédé selon la revendication 20, caractérisé en ce que les charges sont constituées de fibres de verre.

22. Procédé selon la revendication 20, caractérisé en ce que les charges sont constituées de fibres textiles.

23. Procédé selon la revendication 20, caractérisé en ce que les charges sont constituées de fibres métalliques.

24. Dispositif pour réaliser le procédé selon l'une des revendications 1 à 23, avec une extrudeuse pour produire en continu une feuille thermoplastique se trouvant à température de transformation ou avec des bobines se trouvant dans des dispositifs de débobinage, d'où on déroule des feuilles thermoplastiques extrudées et qu'on assemble en feuille thermoplastique en continu, ou avec un dispositif de distribution grâce auquel on peut distribuer des granulés ou de la poudre thermoplastique sur une feuille défilant en continu, et avec un dispositif de lissage et de calibrage disposé en aval de l'extrudeuse, des dispositifs de débobinage ou du dispositif de distribution, dans lequel passe la feuille thermoplastique, l'unité de calibrage et de lissage étant réalisée sous forme de pression à double courroie, possédant de chaque côté une courroie sans fin guidée par deux cylindres de renvoi logés en rotation dans un bâti rigide, sur leur face interne s'exerçant la pression plane de plaques de compression et avec des plaques refroidissables pour refroidir la feuille thermoplastique de la température de transformation à la température finale, à laquelle se termine le lissage et le calibrage de la surface de la feuille thermoplastique, caractérisé en ce qu'à partir des plaques de compression (31, 32) disposées dans le bâti de la presse à double courroie (1) à une certaine distance des courroies de compression (28, 29) s'exerce sur les faces internes des courroies de compression (28, 29) une pression plane régulière hydraulique au moyen d'un milieu fluide de pression délimité vers le haut et vers le bas par la plaque de compression (31) ou bien la face interne de la courroie de compression (28) et sur les côtés par un joint continu (34), ou mécanique au moyen de rouleaux (43) logés entre la plaque de compression (32) et les faces internes des courroies de compression (28, 29), qu'au moins dans une partie des plaques de compression (31, 32) on a disposé des canaux (40) qui sont parcourus par un liquide de refroidissement, pour maintenir la plaque de compression (31, 32) à une température inférieure à la température finale de la feuille thermoplastique (5) à la sortie de la presse à double courroie (1), et dans la partie de la plaque de compression (31, 32) dans laquelle passent les canaux (40), on a disposé des éléments conducteurs de chaleur (39) qui frottent d'une part sur la courroie de compression (28, 29) de la presse à double courroie (1), et qui, d'autre part, en réalisant un bon contact conducteur de la chaleur sont reliés à la plaque de compression (31, 32), de sorte que la chaleur de la feuille thermoplastique (4, 59, 69) soit évacuée par l'intermédiaire de la courroie de compression (28, 29) et des éléments conducteurs de chaleur (39) dans la plaque de compression (31, 32) par conduction thermique.

25. Dispositif selon la revendication 24, caractérisé en ce que les éléments conducteurs de chaleur (39) sont en cuivre.

26. Dispositif selon la revendication 24 ou 25, caractérisé en ce qu'on place l'extrudeuse (2) en amont de la presse à double courroie (1) de telle manière que la masse fondue de matière plastique extrudée (4) s'écoule directement dans la presse à double courroie (1).

27. Dispositif selon la revendication 26, caractérisé en ce que l'extrudeuse (2) possède une buse à fente large (3) comme outil d'extrudeuse (22).

28. Dispositif selon la revendication 26 ou 27, caractérisé en ce qu'on place l'extrudeuse (2) en amont de la presse à double courroie (1), de sorte que la masse fondue de matière plastique (4) est extrudée au milieu de l'écartement des cylindres de la zone d'entrée (61), qui est formé par les courroies de compression (28, 29) passant sur les cylindres de renvoi d'entrée (24, 25) de la presse à double courroie (1).

29. Dispositif selon la revendication 26 ou 27, caractérisé en ce qu'on dépose la masse fondue de matière plastique (4) sur la courroie de compression (28 ou 29) sur le cylindre de renvoi supérieur ou inférieur (24 ou 25) en dehors de l'écartement de la zone d'entrée (61) et qu'elle est transportée par chaque courroie de compression respective (28 ou 29) dans la zone de réaction (62) de la presse à double courroie (1).

30. Dispositif selon la revendication 28 ou 29, caractérisé en ce que la masse fondue de matière plastique (4) extrudée par l'extrudeuse (2) en avant de l'écartement des cylindres dans la zone d'entrée (61) forme un bourrelet.

31. Dispositif selon la revendication 28 ou 29, caractérisé en ce que la masse fondue de matière plastique (4) extrudée par l'extrudeuse (2) en avant de l'écartement des cylindres dans la zone d'entrée (61) ne forme pas de bourrelet.

32. Dispositif selon l'une des revendications 26 à 31, caractérisé en ce qu'on place un dispositif de débobinage avec une bobine (46) pour une courroie support (47) avant la presse à double courroie, la courroie support (47) est déroulée de la bobine et assemblée d'un côté ou des deux côtés avec la masse de matière plastique fondue (4) dans la zone d'entrée (61) de la presse à double courroie.

33. Dispositif selon la revendication 32, caractérisé en ce qu'on place entre la bobine (46) et la presse à double courroie (1) un chauffage à infrarouge ou à air chaud pour préchauffer la courroie support (47).

34. Dispositif selon l'une des revendication 26 à 31, caractérisé en ce qu'on place un dispositif de distribution de charges dans la masse de matière plastique fondue (4) en avant de la presse à double courroie (1).

35. Dispositif selon la revendication 24 ou 25, caractérisé en ce qu'on a placé des unités de débobinage (55, 56) en amont de la presse à double courroie avec des bobines (57, 58) et des bobines de rechange (57a, 58a) pour des feuilles ou films thermoplastiques extrudées, ces feuilles étant déroulées des bobines, assemblées en feuilles superposées (59) et introduites directement dans la presse à double courroie (1).

36. Dispositif selon la revendication 35, caractérisé en ce qu'on place entre les unités de débobinage (55, 56) et la presse à double courroie (1) un chauffage à infrarouge pour réchauffer les feuilles ou films thermoplastiques.

37. Dispositif selon la revendication 24 ou 25, caractérisé en ce qu'on place le dispositif de distribution (67) de la poudre ou des granulés extrudés thermoplastiques (68) en amont de la presse à double courroie (1) à proximité de la zone d'entrée (61), de sorte que la poudre ou les granulés thermoplastiques (68) soient distribuées sur un non tissé qui entre dans la presse à double courroie (1).

38. Dispositif selon la revendication 24 ou 25, caractérisé en ce qu'on décale vers l'amont l'unité de courroie inférieure (65) de la presse à double courroie (1) de telle façon qu'elle dépasse de la zone d'entrée (61) et qu'on place le dispositif de distribution (67) de granulés thermoplastiques extrudés (68) au-dessus de cette unité inférieure de courroie en amont de la zone d'entrée (6), de sorte qu'on transfère la feuille de granulés thermoplastiques distribués (68) à l'aide de la courroie de compression (66) de l'unité inférieure de compression (65) dans la zone de réaction (62) de la presse à double courroie (1).

39. Dispositif selon l'une des revendications 24 à 38, caractérisé en ce qu'on chauffe les cylindres de renvoi d'entrée (24, 25) de la presse à double courroie et qu'ainsi on porte à température élevée les courroies de compression (28, 29, 66) jusque dans la zone d'entrée (61), de sorte qu'on réchauffe la feuille thermoplastique (4, 5, 9, 69) grâce à la chaleur emmagasinée par les courroies de compression (28, 29, 66).

40. Dispositif selon l'une des revendications 24 à 39, caractérisé en ce que la plaque de compression (31, 32) est constituée d'au moins deux parties, deux parties qui sont équipées de canaux (40) et des éléments conducteurs de la chaleur (39), dans les canaux (40) de la partie de la plaque de compression (31, 32) de l'entrée s'écoule un liquide caloporteur pour réchauffer cette pièce, ce qui permet d'apporter de la chaleur supplémentaire à la feuille thermoplastique (4, 59, 69) à ce niveau de la plaque de compression (31, 32).

41. Dispositif selon l'une des revendications 24 à 40, caractérisé en ce que la zone de la plaque de compression (31, 32) ou a lieu le refroidissement, est partagée en plusieurs parties qui possèdent des températures différentes comprises entre la température de transformation et la température finale.

42. Dispositif selon l'une des revendications 24 à 41, caractérisé en ce que la presse à double courroie (1) possède au moins une courroie de compression texturée pour imprimer une texture dans la surface de la feuille thermoplastique (4, 59, 69).

43. Dispositif selon l'une des revendications 24 à 41, caractérisé en ce qu'on place un dispositif de débobinage en amont de la presse à double courroie (1) pour dérouler une ou deux courroies supports texturées, qui sont entraînées avec la feuille thermoplastique (4, 59, 69) dans la presse à double courroie (1) et qui reposent par leur face structurée sur une face de la feuille thermoplastique (4, 59, 69), de sorte que leur texture s'imprime dans la surface de la feuille thermoplastique (4, 59, 69).

44. Dispositif selon l'une des revendications 24 à 43, caractérisé en ce qu'on peut décaler les cylindres de renvoi d'entrée (24, 25) de la presse à double courroie (1) sous pression, pour obtenir un calandrage de la feuille thermoplastique (4, 59, 69).

## Claims

1. Method for the continuous manufacture of thermoplastic synthetic material webs, in particular for the further processing into plates or foils, out of at least one extruded thermoplastic web which has been heated to processing temperature and is conducted in the heated state between two continuously moved press bands each circulating endlessly over two respective deflecting drums, is cooled down between the press bands and in the course thereof calibrated and smoothed at its surface, wherein the cooling of the thermoplastic web from the processing temperature to the final temperature, at which the smoothing and calibration of the surface is terminated, is undertaken under the influence of areal pressure exerted by way of pressure plates on the inward sides of the press bands, characterised thereby, that the areal pressure is exerted evenly on the inward sides of the press bands either hydraulically by the pressure plates or mechanically by means of rollers of fixed location, the pressure plates are maintained at a temperature lower than the final temperature of the thermoplastic web in order thus to maintain a temperature gradient between the thermoplastic web, the press band and the pressure plate, the thermoplastic web is cooled down in that heat is extracted by means of heat conduction from the thermoplastic web by way of the press band to the pressure plate and the areal pressure acts during at least the entire duration of the cooling of the thermoplastic web between the press bands.

2. Method according to claim 1, characterised thereby, that a single contiguous thermoplastic web is extruded, which consists of a melt of thermoplastic synthetic material, is introduced between the press bands and cooled down under areal pressure between the press bands.

3. Method according to claim 2, characterised thereby, that the melt of thermoplastic synthetic material forms a bead of excess melt at the place, at which the areal pressure begins to act.

4. Method according to claim 3, characterised thereby, that the extrusion of the melt of thermoplastic synthetic material is regulated in dependence on the size of the bead.

5. Method according to claim 2, characterised thereby, that the melt of thermoplastic synthetic material does not form a bead at the place, at which the areal pressure begins to act.

6. Method according to claim 1, characterised thereby, that several individual webs consisting of thermoplastic synthetic material are conducted together into a thermoplastic web consisting of layers lying one upon the other, the thermoplastic web is then introduced between the press bands, the webs are preheated to processing temperature before or after the introduction between the press bands and the thermoplastic web is subsequently cooled down under areal pressure between the press bands.

7. Method according to claim 1, characterised thereby, that extruded thermoplastic flakes are scattered to form a thermoplastic web, this thermoplastic web is heated to processing temperature, is introduced between the press bands before or after the preheating and subsequently cooled down under areal pressure between the press bands.

8. Method according to claim 7, characterised thereby, that the thermoplastic flakes are scattered into a fibre fleece.

9. Method according to one of the claims 1 to 8, characterised thereby, that the thermoplastic web is heated additionally before the cooling.

10. Method according to one the claims 1 to 9, characterised thereby, that the cooling of the thermoplastic web to the final temperature, at which the cooling under areal pressure between the press bands is terminated, is undertaken in several steps each with a certain dwell time for the respective intermediate temperature.

11. Method according to one of the claims 1 to 10, characterised thereby, that a structuring is introduced into at least one of the surfaces of the thermoplastic web during the cooling of the thermoplastic web under areal pressure between the press bands.

12. Method according to one of the claims 1 to 11, characterised thereby, that a carrier web is guided together with the thermoplastic web before the same is cooled under areal pressure between the press bands.

13. Method according to one of the claims 1 to 11, characterised thereby, that two thermoplastic webs are so guided together with a carrier web that the carrier web is situated between both the thermoplastic webs and these webs are subsequently cooled down under areal pressure between the press bands.

14. Method according to claim 12 or 13, characterised thereby, that the carrier web is preheated before the guiding together with the thermoplastic web.

15. Method according to claim 14, characterised thereby, that the preheating of the carrier web takes place to the processing temperature of the thermoplastic web.

16. Method according to one of the claims 12 to 15, characterised thereby, that the carrier web consists of a glass fibre fabric.

17. Method according to one of the claims 12 to 15, characterised thereby, that the carrier web consists of a textile fabric or a paper web.

18. Method according to one of the claims 12 to 15, characterised thereby, that the carrier web consists of a metal fabric.

19. Method according to one of the claims 12 to 15, characterised thereby, that the carrier web consists of a fibre fleece.

20. Method according to one of the claims 1 to 11, characterised thereby, that filler substances are worked into the thermoplastic web before its cooling under areal pressure between the press bands.

21. Method according to claim 20, characterised thereby, that the filler substances consist of glass fibres.

22. Method according to claim 20, characterised thereby, that the filler substances consist of textiles fibres.

23. Method according to claim 20, characterised thereby, that the filler substances consist of metal fibres.

24. Apparatus for the performance of the method according to one of the claims 1 to 23, either with an extruder for the production of an extruded, continuously advancing thermoplastic web disposed at processing temperature or with rolls, which are disposed in unreeling equipments and from which extruded thermoplastic webs are drawn off and conducted together into a layered, continuously advancing thermoplastic web, or with a scattering equipment, in which extruded thermoplastic flakes or powder are or is scattered to form a continuously advancing thermoplastic web, and a calibrating and smoothing equipment, into which the thermoplastic web runs and which is arranged in direction of advance behind the extruder, the unreeling equipments or the scattering equipment, wherein the calibrating and smoothing equipment is constructed as double band press and possesses an upper and a lower endless press band guided over two respective deflecting drums borne to be rotable in a rigid press frame and wherein an areal pressure exerted by pressure plates acts on the inward sides of the press bands, and with pressure plates which are constructed to be coolable in order to cool the thermoplastic web from the processing temperature to the final temperature, at which the smoothing and calibration of the surface of the thermoplastic web is terminated, characterised thereby, that an even areal pressure is exerted by the pressure plates (31, 32), which are arranged in the press frame of the double belt press (1) and at the inward sides of and a spacing from the press bands (28, 29), either hydraulically by means of a fluid pressure medium disposed in the space (33), which is bounded upwardly and downwardly respectively by the pressure plate (31) and the inward press band side (28) and towards the sides by a self-contained seal (34), or mechanically by means of rollers (43) of fixed location, which are arranged between the pressure plate (32) and the inward press band side (29), on the inward sides of the press bands (28, 29), that channels (40), which are flowed through by a coolant fluid, are arranged in the pressure plates (31, 32) in at least one region in order to maintain the pressure plates (31, 32) at a temperature lower than the final temperature of the thermoplastic web (5) on leaving the double belt press (1) and thermally conducting elements (39), which on the one hand wipingly contact the press bands (28, 29) of the double belt press (1) and on the other hand are connected with the pressure plates (31, 32) while forming a good thermal contact, are arranged in that region of the pressure plates (31, 32), in which the channels (40) are situated, so that heat is extracted by means of thermal conduction from the thermoplastic web (4, 59, 69) by way of the press bands (28, 29) and the thermally conducting elements (39) to the pressure plates (31, 32).

25. Apparatus according to claim 24, characterised thereby, that the thermally conducting elements (39) consist of copper.

26. Apparatus according to claim 24 or 25, characterised thereby, that the extruder (2) is so mounted in front of the double belt press (1) that the melt of thermoplastic synthetic material (4), which is extruded by the extruder (2), runs directly into the double belt press (1).

27. Apparatus according to claim 26, characterised thereby, that the extruder (2) possesses a fishtail die (3) as extruding tool (22).

28. Apparatus according to claim 26 or 27, characterised thereby, that the extruder (2) is so mounted in front of the double belt press (1) that the melt of thermoplastic synthetic material (4) is extruded into the centre of the rolling gap, which is formed by the press bands (28, 29) at the entry deflecting drums (24, 25) of the double belt press (1), of the inlet zone (61).

29. Apparatus according to claim 26 or 27, characterised thereby, that the melt of synthetic material (4) is applied outside the rolling gap of the inlet zone (61) onto the press band (28 or 29) respectively at the upper or lower deflecting drums (24 or 25) and transported by the respective press band (28 or 29) into the reaction zone (62) of the double belt press (1).

30. Apparatus according to claim 28 or 29, characterised thereby, that the melt of synthetic material (2), which is extruded by the extruder (2), forms a bead in the inlet zone (61) in front of the rolling gap.

31. Apparatus according to claim 28 or 29, characterised thereby, that the melt of synthetic material (2), which is extruded by the extruder (2), does not form a bead in the inlet zone (61) in front of the rolling gap.

32. Apparatus according to one of the claims 26 to 31, characterised thereby, that an unreeling equipment with a roll (46) for a carrier web (47) is mounted in front of the double belt press (1), the carrier web (47) is drawn off from the roll and conducted together at one or both sides with the melt of synthetic material (4) in the inlet zone (61) of the double belt press (1).

33. Apparatus according to claim 32, characterised thereby, that an infra-red radiant heater or a heater operating with hot air is arranged for the preheating of the carrier web (47) between the roll (46) and the double belt press (1).

34. Apparatus according to one of the claims 26 to 31, characterised thereby, that a scattering equipment for the scattering of filler substances into the melt of synthetic material (2) is mounted in front of the double belt press (1).

35. Apparatus according to claim 24 or 25, characterised thereby, that unreeling units (55, 56) with rolls (57, 58) and replacement rolls (57a, 58a) for extruded thermoplastic webs or foils are arranged in front of the double belt press (1) and these webs are drawn off from the rolls, conducted together into a layered web (59) and introduced directly into the double belt press (1).

36. Apparatus according to claim 35, characterised thereby, that an infra-red radiant heater for the heating of the thermoplastic webs or foils is mounted between the unreeling units (55, 56) and the double belt press (1).

37. Apparatus according to claim 24 or 25, characterised thereby, that the scattering device (67) for extruded thermoplastic flakes (68) or powder is so mounted in the proximity of the inlet zone (61) in front of the double belt press (1) that the thermoplastic flakes (68) or the powder are scattered into a fibre fleece which runs into the double belt press (1).

38. Apparatus according to claim 24 or 25, characterised thereby, that the lower band unit (65) of the double belt press (1) is so drawn forward that it protrudes from the inlet zone (61) and the scattering device (67) for the scattering-on of the extruded thermoplastic flakes (68) is so mounted in front of the inlet zone (61) and above this lower band unit that the web of scattered thermoplastic flakes (68) is transported into the reaction zone (62) of the double belt press (1) by the press band (66) of the lower band unit (65).

39. Apparatus according to one of the claims 24 to 38, characterised thereby, that the entry deflecting drums (24, 25) of the double belt press (1) are heated and thereby heat the press bands (28, 29, 66) as far as into the inlet zone (61) to a higher temperature so that the thermoplastic web (4, 59, 69) is heated by the heat stored by means of the thermal capacitance of the press bands (28, 29, 66).

40. Apparatus according to one of the claims 24 to 39, characterised thereby, that the pressure plate (31, 32) consists of at least two parts, both parts are provided with channels (40) and thermally conducting elements (39), a heat carrier fluid flows in the channels (40) of that part of the pressure plate (31, 32), which is associated with the entry region, for the heating of that part, whereby additional heat is transferred there to the thermoplastic web (4, 59, 69) and a coolant flows in the channels (4) of that part of the pressure plate (31, 32), which is associated with the exit region, for the cooling of that part so that heat from the thermoplastic web (4, 59, 69) is delivered there to that part of the pressure plate (31, 32).

41. Apparatus according to one of the claims 24 to 40, characterised thereby, that that region of the pressure plate (31, 32), in which cooling is done, is in turn divided into several regions which possess different temperatures between the processing temperature and the final temperature.

42. Apparatus according to one of the claims 24 to 41, characterised thereby, that the double belt press (1) possesses at least on structured press band for the embossing of a structure into the surface of the thermoplastic web (4, 59, 69).

43. Apparatus according to one of the claims 24 to 41, characterised thereby, that an unreeling device is arranged in front of the double belt press (1) for the drawing-off of one or two web-shaped structure carriers which are conducted with the thermoplastic web (4, 59, 69) through the double belt press (1) and lie by the structured surface on a surface of the thermoplastic web (4, 59, 69) so that their structure is embossed into the surface of the thermoplastic web (4, 59, 69).

44. Apparatus according to one of the claims 24 to 43, characterised thereby, that the entry deflecting drums (24, 25) of the double belt press (1) can be reset under pressure one against the other in order to effect a calendering of the thermoplastic web (4, 59, 69).

Fig. 1

Fig. 2

34 31 28

A

A

39 41

Fig. 3

37 38 40 31 41

34

36 35 33 39 42 28

Fig. 4

Fig. 5

EP 0 212 232 B1

Fig. 6

Fig. 7

EP 0 212 232 B1

Fig. 8

Fig. 9

67

68

25

66

Fig. 10

65

51

28
1

24

69